# EUROPÄISCHE PATENTSCHRIFT

(11) **EP 2 334 168 B1**
(45) Veröffentlichungstag und Bekanntmachung des Hinweises auf die Patenterteilung: **13.07.2016**
(21) Anmeldenummer: 09778189.2
(22) Anmeldetag: 28.08.2009
(51) Int. Cl.: A01J 5/04, F16L 37/107, F16L 37/248, F16L 37/252

(54) **MILCHSCHLAUCHKUPPLUNG**
MILK HOSE COUPLING
ACCOUPLEMENT DE TUYAU LAITIER SOUPLE

(30) Priorität: 05.09.2008 DE 102008046098
(43) Veröffentlichungstag der Anmeldung: 22.06.2011
(73) Patentinhaber: Lactocorder AG, 9052 Niederteufen (CH)
(72) Erfinder: HOEFELMAYR, Tilman, 9052 Niederteufen (CH)
(74) Vertreter: Grünecker Patent- und Rechtsanwälte PartG mbB
(86) Internationale Anmeldenummer: PCT/EP2009/006260
(87) Internationale Veröffentlichungsnummer: WO 2010/025877

(56) Entgegenhaltungen:
- EP-A1- 0 633 039
- DE-A1-102007 010 644
- DE-U- 7 004 671
- DE-U1- 29 513 976
- FR-A- 1 377 585
- FR-A- 1 511 053
- US-A- 5 651 732
- US-B1- 6 206 433

## Beschreibung

Im Allgemeinen betrifft die vorliegende Erfindung eine Milchschlauchkupplung zur Herstellung einer Verbindung zu mindestens einem Schlauchstück, um damit eine Fluidverbindung für Flüssigkeiten und/oder Gase herzustellen.

In vielen Bereichen des täglichen Lebens und in vielen technischen Umgebungen müssen häufig Fluidverbindungen auf der Grundlage flexibler Verbindungsleitungen hergestellt werden, wobei häufig das Erfordernis besteht, die Fluidleitung an einer oder mehreren Stellen aufzutrennen. Z. B. muss ein Verbindungsschlauch nur zeitweilig an einen Auslass angeschlossen werden, oder bei mehr oder minder permanent bestehenden Fluidverbindungen ist an geeigneten Punkten ein Zugang erforderlich, beispielsweise aus Gründen des Messens, der Reinigung, etc. Um die Verbindung zweier Schlauchstücke oder das Ankoppeln eines Schlauchstücks an eine starre Verbindung zu erleichtern, werden hierfür geeignete Schlauchkupplungen vorgesehen, die eine rasche Herstellung und Trennung der Fluidverbindung ermöglichen sollen. Zu diesem Zweck sind eine Vielzahl von Schlauchkupplungen auf dem Markt verfügbar, die in mehr oder weniger ausgeprägter Weise den entsprechenden Einsatzbedingungen angepasst sind. Es gibt jedoch auch zahlreiche Anwendungsfälle, in denen aktuell verfügbare Schlauchkupplungen keine geeignete Lösung darstellen. Beispielsweise müssen insbesondere auf dem Gebiet der Nahrungsmittelindustrie entsprechende Fluidverbindungen besondere Anforderungen erfüllen, die den Einsatz aktuell verfügbarer Schlauchkupplungen nicht geeignet erscheinen lassen, wenn eine entsprechende rasche und effiziente Trennung einer Fluidverbindung erwünscht oder benötigt wird. So müssen beispielsweise Fluidverbindungen in der Nahrungsmittelindustrie eine chemische Inertheit im Hinblick auf die zu transportierenden Substanzen besitzen und müssen zudem auch chemisch resistent sein gegenüber entsprechenden Reinigungschemikalien, die regelmäßig anzuwenden sind, um den zum Teil sehr strengen hygienischen Auflagen gerecht zu werden. Des weiteren müssen ggf. auch entsprechende Temperaturbereiche berücksichtigt werden, die die Verwendung vieler aktuell verfügbarer Schlauchkupplungen ausschließen. Ein besonders anspruchsvoller Anwendungsfall ist auf dem Gebiet der Nahrungsmittelindustrie die Agrarwirtschaft, und insbesondere der Bereich der Milchwirtschaft.

In milchproduzierenden Agrarbetrieben werden in der Regel viele Tiere, etwa Milchkühe, unter streng kontrollierten Bedingungen gehalten, wobei insbesondere das Abmelken der Milch unter Zuhilfenahme von automatisierten oder halbautomatisierten Melkanlagen stattfindet. Beim vollautomatisierten oder halbautomatisierten Melkvorgang wird in der Regel ein Melkgeschirr an die Zitzen der Milchtiere angelegt, was ggf. durch vollautomatisierte Vorrichtungen oder durch entsprechendes Personal geschehen kann. Bereits in dieser Phase des Melkvorgangs sind genaue hygienische Vorschriften zu beachten, deren Nichteinhaltung zu einer Beeinträchtigung der Qualität der Milch und auch langfristig zu einem geringeren Ertrag auf Grund einer etwaigen Beeinträchtigung der Tiergesundheit führen kann. Nach dem Anlegen des Melkgeschirrs und einer entsprechend ausgeübten Stimulationsphase wird Milch aus den Zitzen abgesaugt, wobei dies typischerweise unter Erzeugung eines entsprechenden "Betriebsvakuums" stattfindet, das an der Zitze anliegt und zumindest zeitweilig ein Absaugen der Milch ermöglicht, so dass in dieser Phase Milch von der Zitze über den Melkbecher schließlich in eine Milchleitung gesaugt wird, wobei in allen diesen Komponenten das Betriebsvakuum anliegen muss. Abhängig von der angewendeten Melkstrategie wird das Absaugen der Milch der einzelnen Zitzen in einem kontinuierlichen oder pulsartigen Ablauf durchgeführt, in welchem nach einer Saugphase eine entsprechende Entlastungs- bzw. Massagephase durch entsprechendes Einfalten des Zitzengummis erfolgt. Beim Melkvorgang wird somit Milch aus der Zitze des Tieres in einem kontinuierlichen oder gepulsten Ablauf schließlich in die Milchleitung und dann in einen entsprechenden Vorratsbehälter gesaugt, wobei über einen ausgeprägten Bereich der gesamten Fluidleitung flexible Verbindungsschläuche Anwendung finden, beispielsweise in Form der Schlauchverbindungen, die vom Melkgeschirr weg zu einer entsprechenden starren Fluidverbindung führen. Da die entsprechenden flexiblen Verbindungsleitungen im Umfeld von mehr oder minder automatisierten Stallanlagen oder Melkständen im Einsatz sind, treten zu den anspruchsvollen hygienischen Randbedingungen auch hohe Belastungen im Hinblick auf Verformungen und Trittbelastungen der Fluidverbindungen auf. Aus diesem Grunde werden häufig entsprechende Materialien insbesondere für die Milchschläuche eingesetzt, die von einem entsprechenden Sammelstück oder einem Melkgeschirr wegführen, die zum einen die erforderliche Verträglichkeit mit der Milch und entsprechenden Reinigungsflüssigkeiten zeigen und andererseits auch eine hohe mechanische Belastbarkeit besitzen, so dass in der Regel diese Milchschläuche eine eingeschränkte Elastizität aufweisen und damit insbesondere beim Aufstecken oder Abziehen an einer Verbindungsstelle einen relativ hohen Kraftaufwand erfordern.

Unter diesen anspruchvollen Bedingungen ist eine Auftrennung der Milchleitung im Hinblick auf hygienische Aspekte unter Umständen mit einem gewissen Risiko hinsichtlich einer unerwünschten zusätzlichen Kontamination und auch mit einer Beeinträchtigung des Fliesverhaltens der Milch behaftet, da das Anbringen von Kupplungsteilen in der Fluidleitung zu möglicherweise zusätzlichen Turbulenzen führen kann, die wiederum eine Auswirkung auf die Qualität der Milch haben, und andererseits zusätzliche Unregelmäßigkeiten in der Oberfläche einer Fluidleitung zur Ausbildung von entsprechenden Resten nach Verwendung der Fluidleitung führen können, die dann wiederum auf Grund des Einflusses von Bakterien und dergleichen auf die Milchreste zu einer größeren hygienischen Belastung bei der späteren Verwendung der Fluidleitung führen können.

Andererseits ist jedoch eine häufige temporäre Auftrennung von Milchleitungen im Hinblick auf die allgemeine Überwachung und Steuerung des Ablaufs im Agrarbetrieb äußerst wünschenswert, da nur auf diese Weise quantitative bzw. auch qualitative Aussagen über den allgemeinen Milchfluss in einem Agrarbetrieb und damit auch über die Wirtschaftlichkeit und die Tiergesundheit gemacht werden können. Beispielsweise wird in vielen Agrarbetrieben regelmäßig eine Milchmengenmessung in der Milchleitung vorgenommen, wozu ein entsprechendes Milchmengenmessgerät in die Leitung einzubringen ist. Typischerweise weist das Milchmengenmessgerät entsprechende Anschlussstutzen auf, die mit den jeweiligen Schlauchstücken der Milchleitung zu verbinden sind. Auf Grund der zuvor genannten mechanischen Eigenschaften der entsprechenden Milchleitungen ist der Vorgang des Abkuppelns und Ankuppelns der Milchleitungen ein zeitund kraftaufwendiger Vorgang, der insbesondere bei größeren Agrarbetrieben zu einer deutlichen Beeinträchtigung der Gesamteffizienz auf Grund der erforderlichen Ressourcen an Bedienpersonal führt. Des weiteren ergibt sich auch auf Grund der Tatsache, dass das Äußere der Milchschläuche durch die zum Teil sehr anspruchsvollen Umgebungsbedingungen ein hohes Maß an Verschmutzung und/oder Abnutzung zeigen, eine weitere nachteiligen Wirkung der Auftrennung der Fluidleitungen, so dass nicht nur der Zeit- und Kraftaufwand, sondern die sich auch daraus ergebenden Kontaminationen des Bedienpersonals als unvorteilhaft erachtet werden.

EP 0633039A1 zeigt eine Schlauchverbindung mit einem Bajonettverschluss. Dabei greifen in einem Kupplungsteil ausgebildete Bajonettzapfen in am anderen Kupplungsteil ausgebildete schraubenförmig verlaufende Bajonettkurvennuten ein. Durch Verdrehung der beiden Teile zueinander um 90° wird eine Verbindung der beiden Teile miteinander hergestellt.

Im Hinblick auf die zuvor beschriebene Situation ist es eine Aufgabe der vorliegenden Erfindung, eine Schlauchkupplung bereitzustellen, in der konstruktiv Maßnahmen berücksichtigt sind, um zumindest einige der zuvor genannten Nachteile zu beheben oder zu reduzieren, insbesondere wenn der Bereich nahrungsmittelführender Fluidverbindungen betrachtet wird.

Gemäß einem Aspekt der vorliegenden Erfindung wird die Aufgabe gelöst durch eine Milchschlauchkupplung mit den Merkmalen gemäß Anspruch 1.

Die erfindungsgemäße Milchschlauchkupplung ist somit unter Anwendung konstruktiver Maßnahmen so aufgebaut, dass sich eine einfache und zuverlässige Verriegelung und damit Verbindung der Kupplungsteile erreichen lässt, wobei insbesondere die Vermeidung von beweglichen Komponenten einen gewünscht einfachen Gesamtaufbau gewährleistet, der im Hinblick auf die Verwendung und auch im Hinblick auf hygienische Anforderungen, die ggf. zu erfüllen sind, einen deutlichen Vorteil bietet, Durch die Verriegelung der beiden Eingriffsbereiche unter Drehung, was unter einem kleinen Winkel von weniger als 30 Grad bewerkstelligt wird, ist zudem eine Handhabung unter Vermeidung eines hohen Kraftaufwands möglich, da auch relativ starre Schlauchleitungen, wie sie in Form von Milchleitungen eingesetzt werden, innerhalb dieses relativ kleinen Winkelbereichs verdreht werden können, so dass zwar ein Verriegeln mit relativ geringem Kraftaufwand möglich ist, die entsprechende Eigenelastizität des flexiblen Schlauches jedoch zu einer stabilen Verriegelung während des Betriebs beiträgt. Somit kann die Trennung und Arretierung mit Anfassen je eines Schlauchendes mit je einer Hand erfolgen, ohne dass weitere Verriegelungsmechanismen, etwa in Form von Überwurfmuttern, Hebeln, etc. zu betätigen sind.

In einer weiteren vorteilhaften Ausführungsform weist der erste Eingriffsbereich der Arretiereinrichtung mindestens eine Nocke und der zweite Eingriffsbereich eine zu der mindestens einen Nocke komplementäre Verriegelungsaussparung auf. Diese Art der Ausbildung der Eingriffsbereiche stellt sicher, dass zum einen eine zuverlässige Verriegelung durch Drehbewegung gewährleistet ist, während andererseits insgesamt eine einfache Konstruktion möglich ist, so dass zur guten Handhabbarkeit auch eine hohe mechanische Zuverlässigkeit erreicht wird, da konstruktiv einfache aber stabile Komponenten für die Arretiereinrichtung verwendet sind.

In einer weiteren Ausführungsform weist der erste Eingriffsbereich mindestens zwei Nocken und der zweite Eingriffsbereich zu den mindestens zwei Nocken komplementäre Verriegelungsaussparungen auf. Dadurch gelingt eine noch stabilere Kopplung der beiden Kupplungsteile, wobei die Nocken und die komplementären Aussparungen an geeigneten Positionen angebracht werden können, beispielsweise können die Nocken um 180 Grad zueinander versetzt angeordnet sein oder können auch in axialer Richtung zusätzlich zu einem Winkelversatz einen entsprechenden Abstand zueinander aufweisen, so dass eine gewünschte hohe mechanische Stabilität gewährleistet ist.

In einer weiteren Ausführungsform weist der erste Eingriffsbereich der Arretiereinrichtung genau vier Nocken und der zweite Eingriffsbereich zu den vier Nocken komplementäre Verriegelungsaussparungen auf. Durch diese konstruktive Maßnahme wird bei nur moderat großem Aufwand bei der Herstellung ein hohes Maß an Zuverlässigkeit erreicht, da die vier den verriegelten Zustand sicherstellenden Nocken und die entsprechenden Aussparungen über einen großen Bereich des Umfangs der Kupplungsstücke herumgeführt sein können. Beispielswiese können die vier Nocken mit relativ gleichen Winkelabständen entlang des Umfanges vorgesehen werden, so dass sich eine sehr symmetrische Verteilung der entsprechenden die Verriegelung sicherstellenden Kräfte ergibt. In weiteren Ausführungsformen können zumindest einige der vier Nocken in axialer Richtung einen Abstand zueinander aufweisen, wenn eine noch ausgeprägtere "Steifigkeit" der Schlauchkupplung bei Auftreten von Querbelastungen gewünscht ist.

In einer weiteren vorteilhaften Ausführungsform ist eine Dichtung in dem ersten und/oder dem zweiten Kupplungsteil vorgesehen. Auf Grund des Vorsehens der Dichtung wird eine sehr zuverlässigen Fluidverbindung ermöglicht, wobei insbesondere auch ein hohes Maß an Dichtigkeit bei Auftreten von Gas/Flüssigkeitsmischungen oder bei Vorhandensein eines "Vakuums", d. h. eines Unterdruck bis zu wenigen Pascal gegeben ist, was insbesondere bei der Verwendung in der Milchwirtschaft vorteilhaft ist. Dabei ist die Dichtung als eine "nicht bewegliche" Komponente zu betrachten, die keine Lageänderung, auch nicht von Teilen der Dichtung mit Ausnahme einer geringfügigen Formänderung, beim Arretieren des ersten und des zweiten Kupplungsteils erfährt.

Im hierin verwendeten Sinne ist der Begriff "bewegliche Komponente" so zu verstehen, dass keine Positionsveränderung der Komponente als Ganzes oder von Teilbereichen stattfindet mit Ausnahme einer gewissen minimalen Verformung auf Grund der Eigenelastizität, wie dies beispielsweise bei elastischen Dichtungsmaterialien der Fall ist. Andererseits wird eine Feder, bei der eine Verformung stattfindet und bei der sich etwa ein Endbereich in der Position verändert, als bewegliche Komponente im Sinne der vorliegenden Anmeldung verstanden.

Erfindungsgemäss ist die Dichtung als O-Ring vorgesehen. Damit ergibt sich eine bewährte und zuverlässige Art der Dichtung, in der der O-Ring in einer definierten Position angeordnet ist, die auch bei der Arretierung eingehalten wird, mit Ausnahme einer geringfügigen Deformierung des Dichtungsmaterials, wie dies auch zuvor angegeben ist. Somit kann mittels gut verfügbarer und bewährter Komponenten eine zuverlässige Dichtung der Schlauchkupplung erreicht werden, wobei auf Grund der stabilen Lage sogar die Eigenelastizität des O-Rings ggf. als entsprechende rücktreibende Kraft zur Beibehaltung der verriegelten Position beitragen kann.

In einer weitern vorteilhaften Ausführungsform ist der O-Ring an dem ersten Kupplungsteil vorgesehen. Mit dieser Maßnahme wird erreicht, dass der O-Ring zusammen mit den entsprechenden Nocken auf dem ersten Kupplungsteil aufgebracht ist, so dass der Dichtungsring bei aufgetrennter Fluidverbindung gut zugänglich ist.

In einer weiteren vorteilhaften Ausführungsform weisen der erste und der zweite Kupplungsteil jeweils einen Schlauchverbindungsbereich auf, der als dünnes Rohr ausgebildet ist und eine Wandstärke von 3 mm oder weniger besitzt. Durch Verwenden eines dünnen Rohrs an Schlussstück können somit auch Schlauchstücke mit relativ geringer Eigenelastizität mit dem ersten und/oder dem zweiten Kupplungsteil verbunden werden, wobei der gewünschte Innendurchmesser des Schlauchstücks auch über die Schlauchkupplung hinweg im Wesentlichen beibehalten werden kann, so dass keine Beeinträchtigung der Fliesseigenschaften im Hinblick auf die Fliessgeschwindigkeit und/oder den Druck hervorgerufen wird. Des weiteren kann durch eine entsprechende Anschrägung der Enden der Schlauchverbindungsbereiche auch die entsprechende Stirnseitenfläche gering gehalten werden, so dass nur ein vernachlässigbarer Einfluss auf die Randströmung im Bereich der Schlauchverbindung, also beim Übergang zwischen Schlauch und Kupplungsteil, auftritt.

In einer weiteren vorteilhaften Ausführungsform weisen der erste und der zweite Kupplungsteil jeweils einen Übergangsbereich auf, die zusammen einen Fluidweg bilden, wenn der erste und der zweite Kupplungsteil arretiert sind, wobei der Fluidweg eine Oberfläche bildet, die keine ausgeprägten Turbulenzen hervorruft. Mit dieser konstruktiven Maßnahme wird ein Einfluss der Schlauchkupplung auf die Fluidströmung in Bereiche der Schlauchkupplung gering gehalten, so dass in kritischen Anwendungsbereichen, beispielsweise bei der Leitung von Milchströmen, eine Qualitätsbeeinträchtigung nahezu vernachlässigbar ist.

In einer weiteren Ausführungsform besitzen die den Fluidweg bildenden Übergangsbereiche keine Erhebungen oder Einsenkungen an der Oberfläche. Dies wird beispielsweise bewerkstelligt, indem lediglich entsprechende Stirnflächen des ersten und des zweiten Kupplungsteils aneinander stoßen, so dass bis auf den entsprechenden Stoß zusammenhängende Oberfläche ohne weitere Störungen entsteht.

Erfindungsgemäss ist die Milchschlauchkupplung zur Verbindung oder zur Ankopplung von nahrungsmittelführenden Schlauchstücken ausgebildet. D. h., die verwendeten Materialien sind kompatibel mit den entsprechenden Auflagen, die für die zu transportierenden Nahrungsmitteln einzuhalten sind, wobei erfindungsgemäss die Milchschlauchkupplung zur Leitung von Milch geeignet ist. Im Zusammenwirken mit dem gesamten konstruktiven Aufbau ergibt sich dadurch eine sehr effiziente Kupplung, da einerseits die hygienischen Anforderungen gut erfüllt werden können, da entsprechende Reinigungsflüssigkeiten genauso mit den entsprechenden Komponenten der Schlauchkupplung in Kontakt kommen, wie die zu transportierenden Nahrungsmittel, und andererseits auch die entsprechende Zuverlässigkeit und Dichtigkeit im Hinblick auf das Führen des Vakuums erreicht werden. Des weiteren sorgt der konstruktiv einfache Aufbau, d. h. die Vermeidung von beweglichen Komponenten, zu einer effizienten einfachen Handhabung, wobei dennoch eine dauerhaft zuverlässige Verbindung auch bei häufiger Betätigung der Kupplung erreicht wird. Damit kann insbesondere im Bereich der Agrarwirtschaft, wie dies eingangs beschrieben ist, unter geringem Zeitaufwand und einer geringen Kontamination des Bedienpersonals eine entsprechende Auftrennung der Milchleitungen erfolgen, um damit die Ankopplung entsprechender Komponenten, beispielsweise von Messgeräten und dergleichen zu ermöglichen.

In einer anschaulichen Ausführungsform weist der erste und der zweite Kupplungsteil Polyamidmaterial auf, wobei in weiteren Ausführungsformen Polyamidmaterial in Form von Polyamid 6 und/oder Polyamid 12 vorgesehen wird. Die genannten Materialien besitzen die gewünschten mechanischen und chemischen Eigenschaften, um insbesondere eine Anwendung im Nahrungsmittelsektor und insbesondere auch in der Agrarwirtschaft zu ermöglichen, wobei ein relativ geringer Anteil an Wasser im Polyamid 6 Material zu bereits ausgezeichneten Eigenschaften beiträgt im Hinblick auf die mechanischen und chemischen Eigenschaften bietet. Bei Verwendung des Materials Polyamid 12 ergibt sich noch eine geringere Einlagerung an Wasser, wodurch ggf. eine noch geringere Wechselwirkung mit dem zu transportierenden Fluid und anderen Substanzen, etwa Reinigungssubstanzen und dergleichen erreicht wird.

In einer weiteren vorteilhaften Ausführungsform sind der erste Kupplungsteil und der zweite Kupplungsteil mit Ausnahme der Dichtung vollständig aus einem einheitlichen Material hergestellt. Auf diese Weise wird nicht nur der Gesamtaufbau einfach gehalten, sondern auch der Herstellungsvorgang kann unter effizient mit hoher Präzision erfolgen, beispielsweise durch Spritzgießen, wobei insbesondere vorteilhafterweise die konkrete Ausformung der Arretiereinrichtung durch konstruktive Maßnahmen, d. h. durch das entsprechende Spritzgusswerkzeug mit einem hohen Maß an Genauigkeit vorgegeben ist, so dass nur geringe Bauteiltoleranzen auftreten. Damit wird jedoch ebenfalls zu einer hohen Zuverlässigkeit und zu einer guten Handhabbarkeit beigetragen.

In einem weiteren Aspekt der vorliegenden Erfindung wird die zuvor genannte Aufgabe durch eine Milchschlauchkupplung zum Anschluss eines zur Leitung von Milch geeigneten Schlauchstücks gelöst durch die Merkmalen gemäss Anspruch 1.

Auch in diesen erfindungsgemäßen Aspekt ist die Milchschlauchkupplung zur Verwendung mit milchführenden Schlauchstücken durch konstruktive Maßnahmen so ausgelegt, dass sich eine leichte Handhabbarkeit, und ein hoher Grad an Zuverlässigkeit in Verbindung mit der gewünschten Funktionsweise, beispielsweise im Hinblick auf hygienische Anforderungen, im Wesentlichen störungsfreie Strömung, Vakuumdichtigkeit und dergleichen ergeben.

In einer vorteilhaften Ausführungsform sind die zueinander komplementär ausgebildeten Bereiche beim Arretieren formstabil. Somit wird die Arretierung ohne Verformung von Bereichen der Komponenten erreicht, so dass insgesamt ein höheres Maß an Zuverlässigkeit erreicht wird, da eine mögliche Materialermüdung, die beispielsweise durch Schnappverschlüsse, etc. hervorgerufen werden könnte, im Wesentlichen vermieden wird.

Auch in diesem Aspekt können entsprechende Nocken und Aussparungen vorgesehen werden, die die zuverlässige Arretierung der beiden Kupplungsteile ermöglichen.

In einer weiteren vorteilhaften Ausführungsform sind der erste Kupplungsteil, der zweite Kupplungsteil und der O-Ring die einzigen Bestandteile der Schlauchkupplung. Mit dieser Eigenschaft wird neben einer effizienten Herstellung auch das gewünschte Verhalten während des Betriebs und bei der Reinigung in besonders ausgeprägtem Maße erzielt. D. h., da lediglich die drei Bestandteile erforderlich sind, ist zum einen die Handhabung sehr zeiteffizient und zum anderen ist die Zuverlässigkeit in hohem Maße gegeben, da ein Ausfall der einzelnen Komponenten während des Betriebs kaum auftritt und ggf. nur der Dichtring nach längerem Gebrauch auszuwechseln ist. Des weiteren ist auch eine effiziente Reinigung der Milchschlauchkupplung auf Grund der geringen Anzahl an Einzelkomponenten effizient möglich.

Im Folgenden werden weitere anschauliche Ausführungsformen detaillierter beschrieben, wobei auch auf die begleitenden Zeichnungen Bezug genommen wird, in denen:

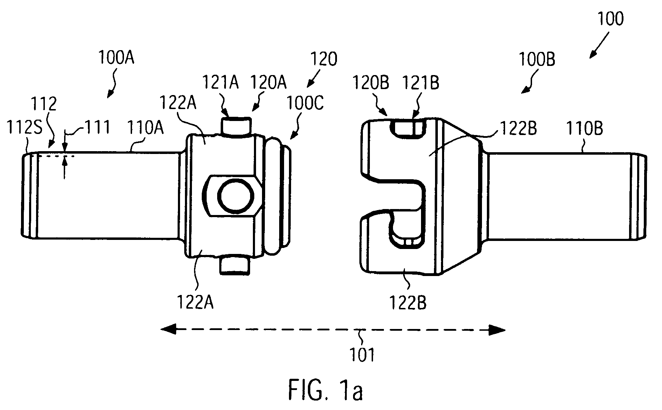

Fig. 1a schematisch eine Seitenansicht einer Schlauchkupplung mit zwei Kupplungsteilen gemäß anschaulicher Ausführungsformen zeigt;

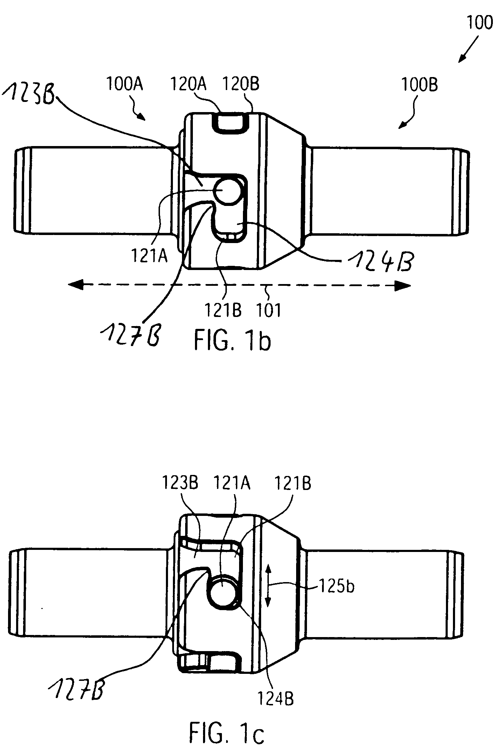

Fig. 1b schematisch die Schlauchkupplung in zusammengefügtem Zustand vor dem Verriegeln zeigt;
Fig. 1c schematisch die Schlauchkupplung im verriegelten Zustand zeigt; und

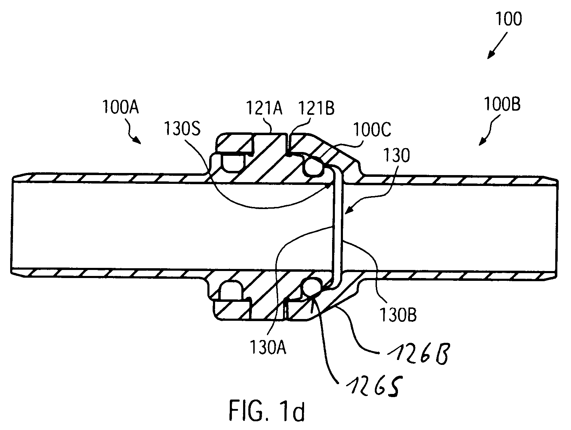

Fig. 1d schematisch eine Querschnittsansicht der Schlauchkupplung im zusammengefügten Zustand gemäß anschaulicher Ausführungsformen zeigt.

Fig. 1 a zeigt schematisch eine perspektivische Darstellung einer Milchschlauchkupplung 100 in Seitenansicht. Die Milchschlauchkupplung 100 umfasst einen ersten Kupplungsteil 100a und einen zweiten Kupplungsteil 100b. In der gezeigten Ausführungsform besitzen beide Kupplungsteile 100a, 100b entsprechende Schlauchanschlussbereiche 110a, 110b, auf die ein entsprechendes Schlauchstück aufgeschoben werden kann. Beispielsweise ist die Milchschlauchkupplung 100 zur Verbindung mit beliebigen Schlauchstücke geeignet, wobei die Abmessungen der Milchschlauchkupplung 100 auf die jeweiligen Schlauchstück angepasst sind. D. h., wenn die Schlauchkupplung 100 als Verbindung zwischen zwei Schlauchstücken mit gleichem Innendurchmesser und mit gleichem Außendurchmesser und ähnlichen Materialeigenschaften dienen soll, sind die jeweiligen Schlauchverbindungsbereiche 110a, 110b im Wesentlichen identisch aufgebaut, so dass die entsprechenden Schlauchstücke aufgeschoben werden können und durch die Eigenelastizität der Schlauchstücke mechanisch fixiert sind oder bei Bedarf durch zusätzliche Einrichtungen, etwa Schlauchschellen, und dergleichen fixiert werden. In anderen Fällen, können die Schlauchverbindungsbereiche 110a, 110b unterschiedlich ausgebildet sein, wenn Schlauchstücke mit unterschiedlichem Innendurchmesser oder Außendurchmesser durch die Kupplung 100 zu verbinden sind. In anderen Ausführungsformen ist einer der Verbindungsbereiche 110a oder 110b so ausgebildet, dass dieser an einer beliebigen Art einer Fluidleitung, etwa einer starren Leitung, und dergleichen angebracht werden kann, während der andere der beiden Bereiche 110a, 110b zur Aufnahme eines entsprechenden Schlauchstücks dient.

In der gezeigten Ausführungsform, in der beide Bereiche 110a, 110b Verbindungsbereiche zum Anschluss an Schlauchstücke repräsentieren, die zudem ähnliche oder gleiche Eigenschaften besitzen, können die Bereiche 110a, 110b in gleicher Weise aufgebaut sein. Dazu ist in einer Ausführungsform der Bereich 110a oder 110b als ein rohrförmiger Stutzen vorgesehen, der einen Innendurchmesser besitzt, der im Wesentlichen dem Innendurchmesser des anzuschließenden Schlauchstücks (nicht gezeigt) entspricht. Des weiteren ist in der gezeigten Ausführungsform eine Wandstärke, die als 111 bezeichnet ist, von etwa 3 mm oder weniger verwendet, so dass ein Aufschieben von Schlauchstücken mit einer geringen Eigenelastizität möglich ist, da der Außendurchmesser des Anschlussbereichs 110a, 110b nur geringfügig größer ist als der Innendurchmesser des aufzuschiebenden Schlauchstücks, wobei dennoch eine ausreichende Haftung erreicht wird. Des weiteren ist in der gezeigten Ausführungsform ein sich verjüngender Endbereich 112 vorgesehen, der an seiner Spitze 112s somit eine deutlich geringere Wandstärke besitzt, so dass einerseits ein relativ kontinuierlicher Übergang der entsprechenden Oberflächen von dem Schlauchstück zu dem Anschlussbereich 110a stattfindet und andererseits auch ein einfacheres Aufschieben des Schlauchstücks ermöglicht wird. In einer Ausführungsform sind beide Anschlussbereiche 110a, 110b oder zumindest einer der Anschlussbereiche dazu ausgelegt, dass ein Milchschlauch aufgeschoben werden kann, wie er typischerweise in Agrarbetrieben Verwendung findet. Zu diesem Zweck weisen die Anschlussbereiche 110a, 110b entsprechende Abmessungen auf, die mit den Abmessungen der jeweiligen Arten von Milchschläuchen korrespondieren.

Ferner umfasst die Schlauchkupplung 100 eine Arretiereinrichtung 120, die einen ersten Eingriffsbereich 120a auf dem ersten Kupplungsteil 100a und einen zweiten Eingriffsbereich 120b auf dem zweiten Kupplungsteil 100b umfasst. In der gezeigten Ausführungsform ist die Arretiereinrichtung so ausgebildet, dass eine Verriegelung der Kupplungsteile 100a, 100b mittels einer Drehbewegung entsprechend einem Winkel von maximal 30 Grad ermöglicht wird, ohne dass irgendwelche beweglichen Komponenten in der Arretiereinrichtung 120 erforderlich sind. Zu diesem Zweck weist in der gezeigten Ausführungsform der erste Eingriffsbereich 120a mindestens eine Nocke 121 a auf, die in eine entsprechende komplementäre Aussparung 121 b in dem zweiten Eingriffsbereich 120 eingreifen kann und mittels einer entsprechenden Drehung eine Verriegelung der Milchschlauchkupplung 100 bewirkt. D. h., eine Verriegelung ist so verstehen, dass zumindest in axialer Richtung, die als 101 angegeben ist, beide Kupplungsteile 100a, 100b mechanisch fixiert bleiben, auch wenn in dieser axialen Richtung 101 eine Zugkraft auf einen oder beide Kupplungsteile 100a, 100b einwirkt. Ferner sind in der Arretiereinrichtung 120 entsprechende Gleitflächen 122a, 122b ausgebildet, die zum einen eine Führung beim Koppeln der Teile 100a, 100b ergeben und auch eine gewisse mechanische Stabilität nach der Verriegelung bieten, selbst wenn nur eine einzelne Nocke 121a in Verbindung mit einer einzelnen Aussparung 121 b vorgesehen ist.

In weiteren anschaulichen Ausführungsformen sind zwei oder mehr Nocken 121a in Verbindung mit den entsprechenden komplementären Aussparungen 121b vorgesehen, so dass sich eine höhere mechanische Belastbarkeit im verriegelten Zustand ergibt. In der dargestellten Ausführungsform sind insgesamt vier Nocken 121a vorgesehen, die beispielsweise mit einem Winkelabstand von etwa 90 Grad um den Umfang des Eingriffsbereichs 120 herum angeordnet sind. In anderen Ausführungsformen können zwei, drei oder mehr als vier entsprechende Nocken 121a vorgesehen sein, wobei deren Verteilung am Eingriffsbereich 120a in geeigneter Weise gewählt werden kann. Beispielsweise müssen nicht notwendigerweise die entsprechenden Nocken 121a in der gleichen Ebene liegen, wie dies etwa in Fig. 1a gezeigt ist, sondern es kann auch ein Versatz in axialer Richtung 101 vorgesehen werden. Dabei sind dann auch entsprechende Maßnahmen in den komplementären Aussparungen 121b vorzusehen, so dass entsprechend längere Gleitwege in axialer Richtung für Nocken 121a ausgebildet sind, die dem komplementären Bereich 120b näher zugewandt sind. Somit wird durch das Vorsehen der einen oder mehreren Nocken 121a, in Verbindung mit den entsprechenden komplementären Aussparungen 121 b eine mechanische Fixierung der Kopplungsteile 100a, 100b möglich, ohne dass weitere bewegliche Komponenten erforderlich sind.

Des weiteren ist in der Schlauchkopplung 100 eine Dichtung 100c an einem oder beiden Kupplungsteilen 100a, 100b angebracht, die erfindungsgemäss, in Form eines O-Rings vorgesehen ist. In der dargestellten Ausführungsvariante ist der O-Ring 100c am ersten Kupplungsteil 100a angebracht, so dass der O-Ring 100c im nicht verbundenen Zustand zugänglich ist, während im verbundenen Zustand der O-Ring 100c durch die Gleitflächen 122b des Bereichs 120b gut geschützt ist, so dass die Einwirkung äußerer Einflüsse und insbesondere eine Verschmutzung gering bleiben.

Fig. 1 b zeigt in schematischer perspektivischer Seitenansicht die Milchschlauchkupplung 100, wenn diese entlang der Längsachse 101 zusammengefügt ist. D. h., die Eingriffsbereiche 120a, 120b sind mittels der einen oder den mehreren Nocken 121a und den entsprechenden komplementären Aussparungen 121b im Eingriff, wobei eine Verriegelung zumindest in Bezug auf eine Zugkraft in Richtung der Längsachse 101 noch nicht vorliegt. In der dargestellten Ausführungsform ist zur Verriegelung der Kupplung 100 ein Bereich 123b, der zur Führung der einen oder mehreren Nocken 121a dient, vorgesehen, wobei die Länge des Bereichs 123b letztlich auch die Kraft einstellt, die auf den O-Ring 100c (siehe Fig. 1 a) einwirkt, wie dies detaillierter mit Bezug zu Fig. 1 d erläutert ist. Ferner ist ein Arretierbereich 124b vorgesehen, entlang welchem die eine oder die mehreren Nocken 121a bei einer Drehbewegung geführt und in welchem schließlich die Nocken 121a im verriegelten Zustand positioniert sind. Ferner ist ein Vorsprung bzw. Nase 127b am Übergang zwischen den Bereichen 123b und 124b vorgesehen, die eine gewisse Stabilität der Position der Nocke(n) 121a im verriegelten Zustand gewährleistet.

Fig. 1c zeigt schematisch die Milchschlauchkupplung 100 im verriegelten Zustand. Wie gezeigt sind im Gegensatz zum Zustand der Milchschlauchkupplung 100 in Fig. 1 b die beiden Kupplungsteile 100a, 100b zueinander um einen gewissen Winkel, der in der gezeigten Ausführungsform kleiner als 30 Grad ist, verdreht, so dass jede der Nocken 121a mit dem angewinkelt zu dem Bereich 123b verlaufenden Arretierbereich 124b im Eingriff ist, der in Bezug zumindest auf Zugkräfte entlang der Längsachse 101 (siehe Fig. 1 b) für eine effiziente und zuverlässige mechanische Kopplung der Teile 100a, 100b sorgt. Durch die Länge 125b des Arretierbereichs 124b ist somit der zur Verriegelung erforderliche Drehwinkel zur gegenseitigen Verdrehung der Kupplungsteile 100a, 100b Erfindungsgemäss sind dazu etwa eine Verdrehung im Bereich von weniger als 30 Grad erforderlich, so dass die Kupplung 100 ohne übermäßigen Kraftaufwand auch verriegelt werden kann, wenn das eine oder die zwei Schlauchstücke, die an einem oder beiden Teile 100a, 100b angebracht sind, eine relativ geringe Elastizität zumindest gegenüber einer Verdrehung besitzen. Beim Zusammenfügen der Teile 100a, 100b wird auch die Dichtung 100c geringfügig elastisch verformt, wobei die dadurch hervorgerufene "rückstellende" Kraft im verriegelten Zustand im Bereich 124b die Nocke(n) 121a an die an die Nase 127b anschließende Wand drückt, so dass die Nase 127b in Verbindung mit der rückstellenden Kraft einer Verdrehung der Teile 100a, 100b entgegen wirkt und damit die verriegelte Position stabilisiert.

In einigen Ausführungsformen (nicht gezeigt) können die Aussparungen 121b, d. h. die Bereiche 123b und der Verriegelungsbereich 124b so ausgebildet sein, dass zunächst beim Zusammenfügen der Kupplungsteile 100a, 100b auch eine gewisse Verdrehung der Kupplungsteile durch einen entsprechenden schrägen Verlauf des als Führung dienenden Bereichs 123b bewirkt wird, so dass ein gewisser Grad an "Vorspannung" in dem entsprechenden angeschlossenen Schlauchstück hervorgerufen wird, die dann auch dazu beiträgt, dass die entsprechende Nocke 121a mittels dieser Vorspannung in den Arretierbereich 124b eingeschoben wird und dadurch eine gewisse Stabilität im Hinblick auf eine ungewollte Verdrehung der Kupplungsteile 100a, 100b auf Grund der durch die Elastizität des angeschlossenen Schlauchsstücks bewirkten Gegenkraft ergibt. Somit wird eine gewisse "selbsthemmende" Wirkung im verriegelten Zustand, wie er in Fig. 1c gezeigt ist, erreicht. Dazu kann auch die Elastizität des O-Ring 100c (siehe Fig. 1a) beitragen, der bei einer entsprechenden Ausbildung der Bereiche 123b, 124b, wie dies zuvor beschrieben ist, ebenfalls ein gewisses Maß an rücktreibender Kraft hervorrufen kann, wenn eine ungewollte Drehbelastung an der Milchschlauchkupplung 100 auftritt.

Fig. 1d zeigt eine schematische Schnittansicht der Milchschlauchkupplung 100 im verriegelten Zustand. Wie gezeigt, sind die Nocken 121 a mit den entsprechenden Aussparungen 121b und insbesondere mit den in Fig. 1d nicht gezeigten Arretierbereichen 124b (siehe Fig. 1c) in Eingriff, so dass eine mechanisch stabile Verbindung der beiden Teile 100a, 100b erfolgt. Des weiteren sorgt der O-Ring 100c dafür, dass keine unerwünschten Substanzen in den Innenraum der Schlauchkupplung 100 eintreten und auch dass keine Substanzen aus den Innenraum austreten, wobei insbesondere auch eine Gasdichtigkeit erreicht wird, so dass die Kupplung 100 auch vorteilhaft für die Leitung von Gasen insbesondere bei Unterdruckbedingungen im Innenraum der Kupplung 100 geeignet ist. Wie ferner in der dargestellten Ausführungsform gezeigt sind, umfasst der Kupplungsteil 100b erfindungsgemäss einen konisch ausgebildeten Bereich 126b im Anschluss an die Gleitflächen 122b auf. Durch den Bereich 126b wird auch erfindungsgemäss eine konische Dichtfläche 126s gebildet, die mit dem O-Ring 100c in Kontakt ist. Durch den Winkel, den die Dichtfläche 126s mit der Längsrichtung 101 (siehe Fig. 1a, 1 b) bildet, erfolgt somit beim Ankuppeln der Teile 100a, 100b eine "Übersetzung", also eine Erhöhung der auf den O-Ring 100c einwirkenden Andruckskraft, so dass sich eine zuverlässige Dichtigkeit erreichen lässt. Durch diese konische Dichtfläche gelingt somit auch ein Ausgleich im Hinblick einer gewissen Unrundheit des O-Rings 100c und/oder des Bereichs 126b. Ferner wird durch die konische Fläche 126s auch eine elastische Verformung des O-Rings entlang der Längsache hervorgerufen, die zu der gewünschten rückstellenden Kraft beim Verriegeln führt und damit im Zusammenwirken mit der Nase 127b (siehe Fig. 1b, 1 c) zu einem stabilen verriegelten Zustand führt, wie dies auch zuvor erläutert ist.

Wie zuvor bereits beschrieben ist, tritt insbesondere bei der Verwendung im Zusammenhang mit automatischen Melkanlagen häufig die Notwendigkeit auf, entsprechende Fluidleitungen aufzutrennen, wobei in den entsprechenden Leitungen sowohl die Milch als auch der erforderliche Betriebsunterdruck zu übertragen sind. Wie ferner gezeigt ist, wird durch die Kupplungsteile 100a, 100b ein entsprechender Übergangsbereich 130 gebildet, in welchem die fluidführenden Innenräume der beiden Teile 100a, 100b zusammenstoßen. In der gezeigten Ausführungsform sind dabei die entsprechenden Innenräume gleich gewählt, so dass auch im Bereich 130 eine Oberfläche 130s gebildet wird, die eine Strömung zulässt, ohne dass nennenswerte Turbulenzen im Übergangsbereich 130 gebildet werden. D. h., die Oberfläche 130s besitzt weder ausgeprägte Erhebungen noch Einsenkungen, die zu einer Störung der Strömung führen könnten. In der gezeigten Ausführungsform sind die entsprechenden Stirnflächen 130a bzw. 130b mit sehr geringem Abstand angeordnet, um beispielsweise etwaigen Fertigungstoleranzen Rechnung zu tragen, so dass sich lediglich einer kleiner Spalt in der Oberfläche 130s ergibt. D. h., beim Betrieb der Milchschlauchkupplung 100 kann eine relativ ungestörte Strömung der Betriebsflüssigkeit, der Milch, erreicht werden, wobei auch die gewünschten Druckbedingungen in der entsprechenden Fluidleitung durch die Kupplung 100 aufgrund der hohen Dichtigkeit und der großen Zuverlässigkeit der Dichtung 100c im Zusammenwirken mit der erfindungsgemässen konischen Dichtfläche 126s beibehalten werden.

Ferner ergibt sich auch im Zusammenhang mit kritischen Flüssigkeiten und/oder Gasen, etwa in der Nahrungsmittelindustrie, etwa in Form von Milch, keine nennenswerte Einlagerung von Resten, die zu hygienischen Problemen führen könnten. Insbesondere sind typische kritische Bereiche, etwa der Bereich 130, ebenfalls durch eine Reinigungsflüssigkeit beaufschlagbar, ohne dass ein zusätzlicher Aufwand beim Reinigen erforderlich ist. D. h., das entsprechende Spülen der Fluidleitung, wie es typischerweise in Agrarbetrieben regelmäßig durchgeführt wird, ist auch für eine Reinigung der Milchschlauchkupplung 100 ausreichend, da der konstruktive Aufbau der Milchschlauchkupplung 100 das Erzeugen kritischer Bereiche vermeidet und im Wesentlichen keine Komponenten mit einer ausgeprägten Oberflächentopographie mit dem Fluid in Kontakt kommen.

Die Milchschlauchkupplung 100, wie sie beispielsweise mit Bezug zu den Fig. 1a bis 1 d beschrieben ist, kann somit in effizienter Weise, etwa in Form von Spritzgussteilen, hergestellt werden, wodurch die erforderliche Maßhaltigkeit der entsprechenden Komponenten, etwa der Nocken 121a und der Aussparungen 121b, durch konstruktive Maßnahmen ohne spezielle Nachbearbeitung gewährleistet ist. D. h., die endgültige Fertigstellung der Milchschlauchkupplung 100 erfordert in den dargestellten Ausführungsbeispielen lediglich, dass eine weitere Komponente, d. h. die Dichtung 100c an einem der Kupplungsteile angebracht wird. Dafür können gängige Größen an O-Ringen Verwendung finden, wobei eine entsprechende Anpassung an eine Normgröße durch konstruktive Maßnahmen in Bezug auf Kopplungsteile 100a, 100b möglich ist. Damit ergibt sich eine zuverlässig und präzise wirkende Verbindung von Milchleitungen, wobei die kleine Anzahl an Einzelkomponenten in Verbindung mit deren genauen Reproduzierbarkeit zu geringen Toleranzen und damit zu der gewünschten Zuverlässigkeit bei gleichzeitig einfacher Handhabung führt. Des weiteren kann auch eine effiziente und einfache Reinigung der Außenbereiche der Kupplungsteile 100a, 100b erfolgen, da keine empfindlichen Komponenten, etwa Federn, Überwurfmuttern, und dergleichen vorhanden sind. Bei Verwendung geeigneter Materialien lässt sich die Milchschlauchkupplung 100 für kritische Substanzen verwenden, in Form von Milch, etc., wobei insbesondere Polyamidmaterialien, etwa des Typs 6 oder 12 effizient eingesetzt werden können, die auch eine effiziente Herstellung unter Ausnutzung von Spritzgussverfahren ermöglichen.

Der kompakte Aufbau der Milchschlauchkupplung 100 ermöglicht auch eine Demontage bei einem hohen Grad an Verschmutzung, wie dies insbesondere im Agrarsektor häufig auftreten kann, ohne dass die Gefahr einer Beeinträchtigung der Funktion von Komponenten besteht, da die kompakten Außenflächen ohne filigrane Komponenten leicht zu reinigen sind und auch die wenigen Einzelteile bei einer Verschmutzung während der Demontage einfach gesäubert werden können. Dies wird durch den kompakten Aufbau unter Vermeidung von kleinen, empfindlichen oder komplexen Komponenten in Form von etwa Federn, Muttern, beweglichen Stiften, etc. erreicht.

## Patentansprüche

1. Milchschlauchkupplung zum Anschluss eines zur Leitung von Milch geeigneten Schlauchstücks, mit
einem ersten Kupplungsteil (100a),
einem zweiten Kupplungsteil (100b), mit einem konisch ausgebildeten Außenbereich (126b), der eine konische Dichtfläche (126s) bildet,
einem O-Ring (100c), der an dem ersten (100a) oder dem zweiten Kupplungsteil (100b) angebracht ist,
wobei der erste Kupplungsteil (100a) und der zweite Kupplungsteil (100b) zueinander komplementär ausgebildete Bereiche (120a, 120b) ohne bewegliche Komponenten aufweisen und der erste und der zweite Kupplungsteil (100a, 100b) durch die zueinander komplementär ausgebildeten Bereiche aneinander durch gegenseitiges Verdrehen arretierbar sind, so dass der O-Ring (100c) mit der konischen Dichtfläche (126s) in Kontakt ist, und wobei der erste Kupplungsteil (100a), der zweite Kupplungsteil (100b) und der O-Ring (100c) die einzigen Bestandteile sind,
**dadurch gekennzeichnet dass** der zur Arretierung erforderliche Winkelbereich beim Verdrehen 30° oder kleiner ist

2. Milchschlauchkupplung nach Anspruch 1, wobei die zueinander komplementär ausgebildeten Bereiche (120a, 120b) beim Arretieren formstabil sind.

3. Milchschlauchkupplung nach Anspruch 1 oder 2, wobei der erste Kupplungsteil einen ersten Bereich (120a) der zwei komplementär ausgebildeten Bereiche aufweist, der eine oder mehrere Nocken (121a) aufweist.

4. Milchschlauchkupplung nach Anspruch 3, wobei der zweite Kupplungsteil einen zweiten Bereich (120b) der zwei komplementär ausgebildeten Bereiche aufweist, der eine oder mehrere Aussparungen (121 b) zum Eingriff mit der einen oder mehreren Nocken (121a) aufweist.

5. Milchschlauchkupplung nach einem der Ansprüche 1 bis 4, wobei der erste und der zweite Kupplungsteil aus einem Polyamidmaterial aufgebaut sind.

6. Milchschlauchkupplung nach Anspruch 5, wobei der erste und zweite Kupplungsteil vollständig aus dem Polyamidmaterial aufgebaut sind.

7. Milchschlauchkupplung nach Anspruch 4, wobei genau vier Nocken (121a) und zu den vier Nocken (121a) komplementäre Verriegelungsaussparungen (121b) vorgesehen sind.

8. Milchschlauchkupplung nach einem der Ansprüche 1 bis 7, wobei der Dichtring an dem ersten Kupplungsteil (100a) vorgesehen ist.

9. Milchschlauchkupplung nach einem der vorhergehenden Ansprüche, wobei der erste und der zweite Kupplungsteil jeweils einen Schlauchverbindungsbereich (110a, 110b) aufweisen, der als dünnes Rohr ausgebildet ist und eine Wandstärke von 3 mm oder weniger aufweist.

10. Milchschlauchkupplung nach einem der vorhergehenden Ansprüche, wobei der erste und der zweite Kupplungsteil jeweils einen Übergangsbereich (130) aufweisen, die zusammen einen Fluidweg bilden, wenn der erste und der zweite Kupplungsteil arretiert sind, und wobei der Fluidweg eine Oberfläche (130s) bildet, die keine ausgeprägten Turbulenzen hervorruft.

11. Milchschlauchkupplung nach Anspruch 10, wobei die den Fluidweg bildenden Übergangsbereiche keine Erhebungen oder Einsenkungen an der Oberfläche aufweisen.

12. Milchschlauchkupplung nach Anspruch 6, wobei das Polyamidmaterial Polyamid 6 und/oder Polyamid 12 aufweist.

13. Milchschlauchkupplung nach einem der vorhergehenden Ansprüche, wobei der erste und der zweite Kupplungsteil mit Ausnahme des O-rings vollständig aus einem einheitlichen Material hergestellt sind.

## Claims

1. Milk hose coupling for connection to a hose piece suitable for conveying milk, comprising
a first coupling part (100a),
a second coupling part (100b) provided with a conically configured outer area (126b) which defines a conical sealing surface (126s),
an O-ring (100c) attached to said first (100a) or said second coupling part (100b), wherein said first coupling part (100a) and said second coupling part (100b) comprise areas (120a, 120b) which are configured such that they are complementary to one another and which do not include any movable components, and said first and second coupling parts (100a, 100b) are adapted to be locked on one another by mutual twisting by means of said complementary areas, so that the O-ring (100c) is in contact with the conical sealing surface (126s), and wherein the first coupling part (100a), the second coupling part (100b) and the O-ring ring (100c) are the only components,
**characterized in that**
the angular range required for locking upon twisting is 30° or smaller.

2. Milk hose coupling according to claim 1, wherein the complementary formed areas (120a, 120b) are dimensionally stable when they are being locked.

3. Milk hose coupling according to claim 1 or 2, wherein the first coupling part comprises a first area (120a) of the two complementary formed areas, said first area (120a) comprising one or a plurality of cams (121 a).

4. Milk hose coupling according to claim 3, wherein the second coupling part comprises a second area (120b) of the two complementary formed areas, said second area (120b) comprising one or a plurality of recesses (121b) for engagement with said one or said plurality of cams (121a).

5. Milk hose coupling according to one of the claims 1 to 4, wherein said first and said second coupling part are composed of a polyamide material.

6. Milk hose coupling according to claim 5, wherein said first and said second coupling part are entirely composed of the polyamide material.

7. Milk hose coupling according to claim 4, wherein there are provided precisely four cams (121 a) and four locking recesses (121b) which are complementary to said four cams (121 a).

8. Milk hose coupling according to one of the claims 1 to 7, wherein the sealing ring is provided on the first coupling part (100a).

9. Milk hose coupling according to one of the preceding claims, wherein the first and the second coupling part are each provided with a hose connection area (100a, 110b), which is implemented as a thin tube and which has a wall thickness of 3 mm or less.

10. Milk hose coupling according to one of the preceding claims, wherein the first and the second coupling part are each provided with a transition area (130), said transition areas defining together a fluid path when the first and the second coupling part are locked, and wherein the fluid path defines a surface (130s) which does not cause major turbulences.

11. Milk hose coupling according to claim 10, wherein the transition areas defining the fluid path have neither any elevations on nor any depressions in their surfaces.

12. Milk hose coupling according to claim 6, wherein the polyamide material comprises polyamide 6 and/or polyamide 12.

13. Milk hose coupling according to one of the preceding claims, wherein the first and the second coupling part are, with the exception of the O-ring, fully produced from a uniform material.

## Revendications

1. Raccord de tuyau flexible de lait pour raccorder un tronçon de tuyau flexible adapté à véhiculer du lait, comprenant
une première pièce de raccord (100a),
une deuxième pièce de raccord (100b) avec une zone extérieure (126b) de configuration conique formant une surface d'étanchéité conique (126s),
un joint torique (100c) qui est placé sur la première (100a) ou la deuxième pièce de raccord (100b),
raccord
dans lequel la première pièce de raccord (100a) et la deuxième pièce de raccord (100b) présentent des zones (120a, 120b) de configuration mutuellement complémentaire et sans composants mobiles, et la première pièce de raccord et la deuxième pièce de raccord (100a, 100b) peuvent être bloquées l'une par rapport à l'autre au moyen des zones de configuration mutuellement complémentaire, par rotation relative réciproque, de sorte que le joint torique (100c) entre en contact avec la surface d'étanchéité conique (126s), et
dans lequel la première pièce de raccord (100a), la deuxième pièce de raccord (100b) et le joint torique (100c) sont les seules et uniques parties constitutives, **caractérisé**
**en ce que** la zone angulaire nécessaire au blocage lors de la rotation relative est de 30° ou moins.

2. Raccord de tuyau flexible de lait selon la revendication 1, dans lequel les zones (120a, 120b) de configuration mutuellement complémentaire sont de forme stable et rigide lors du blocage.

3. Raccord de tuyau flexible de lait selon la revendication 1 ou la revendication 2, dans lequel la première pièce de raccord comporte la première zone (120a) desdites deux zones de configuration mutuellement complémentaire, qui présente un ou plusieurs ergots (121a).

4. Raccord de tuyau flexible de lait selon la revendication 3, dans lequel la deuxième pièce de raccord comporte la deuxième zone (120b) desdites deux zones de configuration mutuellement complémentaire, qui présente un ou plusieurs évidements (121b) pour la venue en prise avec ledit un ou lesdits plusieurs ergots (121a).

5. Raccord de tuyau flexible de lait selon l'une des revendications 1 à 4, dans lequel la première pièce de raccord et la deuxième pièce de raccord sont réalisées en un matériau de polyamide.

6. Raccord de tuyau flexible de lait selon la revendication 5, dans lequel la première pièce de raccord et la deuxième pièce de raccord sont réalisées en totalité en un matériau de polyamide.

7. Raccord de tuyau flexible de lait selon la revendication 4, dans lequel sont prévus exactement quatre ergots (121a) et des évidements de verrouillage (121b) complémentaires aux dits quatre ergots (121a)

8. Raccord de tuyau flexible de lait selon l'une des revendications 1 à 7, dans lequel la bague d'étanchéité est prévue sur la première pièce de raccord (100a).

9. Raccord de tuyau flexible de lait selon l'une des revendications précédentes, dans lequel la première pièce de raccord et la deuxième pièce de raccord présentent chacune une zone de liaison avec le tuyau flexible (110a, 110b), qui est réalisée sous forme de tube mince et présente une épaisseur de paroi de 3 mm ou moins.

10. Raccord de tuyau flexible de lait selon l'une des revendications précédentes, dans lequel la première pièce de raccord et la deuxième pièce de raccord présentent chacune respectivement une zone de transition (130), qui forment ensemble, un chemin de circulation de fluide lorsque la première pièce de raccord et la deuxième pièce de raccord sont bloquées, et dans lequel le chemin de circulation de fluide forme une surface (130s), qui ne produit pas de turbulences marquées.

11. Raccord de tuyau flexible de lait selon la revendication 10, dans lequel les zones de transition formant le chemin de circulation de fluide, ne présentent pas de reliefs ou de creux à la surface.

12. Raccord de tuyau flexible de lait selon la revendication 6, dans lequel le matériau de polyamide comprend du polyamide 6 et/ou du polyamide 12.

13. Raccord de tuyau flexible de lait selon l'une des revendications précédentes, dans lequel la première pièce de raccord et la deuxième pièce de raccord, exception faite du joint torique, sont fabriquées en totalité en un matériau homogène unitaire.
